(19) Europäisches Patentamt
European Patent Office
Office européen des brevets

(11) Veröffentlichungsnummer: **0 292 425 B1**

# (12) EUROPÄISCHE PATENTSCHRIFT

(45) Veröffentlichungstag der Patentschrift:
04.09.91 Patentblatt 91/36

(51) Int. Cl.$^5$: **F16B 13/14, F16B 35/00,**
**// E01B9/10**

(21) Anmeldenummer: **88810198.7**

(22) Anmeldetag: **25.03.88**

(54) **Verbundanker mit elektrischer Isolation.**

(30) Priorität: **19.05.87 DE 3716703**

(43) Veröffentlichungstag der Anmeldung:
**23.11.88 Patentblatt 88/47**

(45) Bekanntmachung des Hinweises auf die
Patenterteilung:
**04.09.91 Patentblatt 91/36**

(84) Benannte Vertragsstaaten:
**AT BE CH DE FR GB IT LI NL SE**

(56) Entgegenhaltungen:
DE-A- 2 928 933
DE-A- 3 320 429
FR-A- 2 138 796
FR-A- 2 246 762

(73) Patentinhaber: **HILTI Aktiengesellschaft**
**FL-9494 Schaan (LI)**

(72) Erfinder: **Bisping, Heinz**
**Feichtmayrstrasse 15**
**W-8000 München 50 (DE)**
Erfinder: **Mauthe, Peter**
**Vöstweg 10**
**W-8065 Kleinberghofen (DE)**
Erfinder: **Leibhard, Erich**
**Bauweberstrasse 2**
**W-8000 München 71 (DE)**

(74) Vertreter: **Wildl, Roland**
**Hilti Aktiengesellschaft Patentabteilung**
**FL-9494 Schaan (LI)**

**Beschreibung**

Die Erfindung betrifft ein mittels aushärtender Massen in einem Bohrloch in einem Aufnahmematerial verankerbares Befestigungselement, mit einem ein Anschlussgewinde aufweisendem Kernstück aus Metall, das in dem sich in verankertem Zustand im Bohrloch befindlichen Bereich eine Ummantelung aus einem elektrisch nicht leitenden Kunststoff trägt.

Befestigungselemente der genannten Art werden hauptsächlich im Geleisebau zur Befestigung von elektrischen Strom leitenden Schienen auf einem beispielsweise aus Beton bestehenden Unterbau verwendet. Dabei wird zunächst eine aushärtende Masse in bereits vorgemischtem Zustand oder in separaten Abteilen einer zerstörbaren Patrone in das Bohrloch einbracht und anschliessend das Befestigungselement in das Bohrloch eingeführt. Beim Einführen des Befestigungselementes — meist unter Drehbewegung — erfolgt eine Durchmischung der Komponenten sowie eine gleichmässige Verteilung der aushärtenden Masse entlang des Bohrloches. Dabei wird das Befestigungselement so tief in das Bohrloch eingeführt, bis es mit seiner setzrichtungsseitigen Stirnseite am Grund des Bohrloches zur Anlage gelangt.

Bei bisher bekannten, beispielsweise aus der DE-A-2928933 und der DE-A-3320429 ersichtlichen Befestigungselementen ist die setzrichtungsseitige Stirnseite der Ummantelung als quer zur Achsrichtung verlaufende Dachschneide ausgebildet. Bei dieser Art der Ausbildung der Ummantelung kommt das Befestigungselement zuerst mit den radial äussersten Punkten der setzrichtungsseitigen Stirnseite am Grund des Bohrloches zur Anlage. Dabei kann insbesondere beim Einführen des sich drehenden Befestigungselementes die Ummantelung an ihrer Stirnseite beschädigt oder ganz zerstört werden, so dass die Isolationswirkung gegenüber dem Kernstück mangelhaft wird.

Der Erfindung liegt die Aufgabe zugrunde, ein mittels aushärtender Massen verankerbares Befestigungselement zu schaffen, dessen isolierende Ummantelung beim Setzvorgang nicht zerstört wird.

Gemäss Erfindung wird dies dadurch erreicht, dass die Ummantelung im Zentrum ihrer setzrichtungsseitigen Stirnseite einen am Grund des Bohrloches abstützbaren Anschlag aufweist, der von einem zapfenartigen Fortsatz oder von der Spitze der eine kegelförmige Kontur aufweisenden setzrichtungsseitigen Stirnseite der Ummantelung gebildet ist.

Das Anbringen des erfindungsgemässen Anschlages in Form des zapfenartigen Fortsatzes oder der Spitze der kegelförmigen Kontur mit einer Querschnittsfläche, die nur einen Bruchteil der Fläche der Stirnseite beträgt, gewährleistet, dass das Befestigungselement im Zentrum und nicht an der Peripherie zur Anlage am Bohrlochgrund kommt. Die Relativbewegung zwischen der Ummantelung des Befestigungselementes und dem Bohrlochgrund ist somit gering. Dadurch wird verhindert, dass die Ummantelung im Bereich der setzrichtungsseitigen Stirnseite beim Auflaufen des Befestigungselementes am Bohrlochgrund beschädigt wird.

Der Anschlag in Form des zapfenartigen Fortsatzes kann an der Ummantelung selbst angeformt oder nachträglich angebracht werden. Ein solch zapfenartiger Fortsatz kann auch über eine Sollbruchstelle mit der Ummantelung verbunden sein, so dass er von der Ummantelung abgetrennt wird, sobald er am Grund des Bohrloches zur Anlage kommt.

Die als Anschlag dienende Spitze der kegelförmigen Kontur kann als Kreiskegel oder beispielsweise vierseitige Pyramide ausgebildet werden. Um eine gleichmässige Wandstärke der Ummantelung zu erreichen ist vorzugsweise auch die setzrichtungsseitige Stirnseite des Kernstückes als Kegel ausgebildet. Dabei ist der Kegelwinkel der Spitze der Ummantelung vorteilhaft kleiner, als derjenige des Bohrlockgrundes. Durch diesen Winkelunterschied wird sichergestellt, dass die Ummantelung im Zentrum des Bohrloches zur Anlage kommt. Der Winkelunterschied zwischen der Spitze der Ummantelung und dem Bohrlochgrund kann gering sein. Dadurch ist auch der Anteil der aushärtenden Masse an der setzrichtungsseitigen Stirnseite des Befestigungselementes gering. Im Falle einer pyramidenförmig ausgebildeten Spitze ist darauf zu achten, dass der grösste Winkel, das heisst der Winkel zwischen den diametral gegenüberliegenden Kanten der Pyramide kleiner ist als derjenige des Bohrlochgrundes.

Das Kernstück kann als Ankerbolzen mit die Ummantelung entgegen der Setzrichtung überragendem Aussengewinde ausgebildet werden. Für solche Ankerbolzen können beispielsweise Gewindestangen als Meterware verwendet und entsprechend der Anwendung auf die jeweilige Länge zugeschnitten werden, was eine wirtschaftliche Herstellung der Befestigungselemente ermöglicht. Das Gewinde des Ankerbolzens im Bereich der Ummantelung ergibt ausserdem eine gute formschlüssige Verbindung mit dem elektrisch nicht leitenden Kunststoff der Ummantelung.

Eine weitere Möglichkeit besteht darin, das Kernstück als Gewindehülse mit Innengewinde auszubilden, wobei das Innengewinde der Aufnahme einer Befestigungsschraube dient. Ein solches Befestigungselement weist den Vorteil auf, dass es nach dem Herausdrehen der Befestigungsschraube das Aufnahmematerial nicht überragt. Um während der Bauarbeiten ein Eindringen von Verschmutzungen in das Gewinde zu verhindern,

2

kann das Innengewinde mittels eines lösbaren Stopfens abgedeckt werden.

Die Erfindung soll nachstehend anhand der sie beispielsweise wiedergebenden Zeichnungen näher erläutert werden. Es zeigen :

Fig. 1 ein erfindungsgemässes Befestigungselement, teilweise im Schnitt dargestellt,

Fig. 2 eine stirnseitige Ansicht der des in Fig. 1 dargestellten Befestigungselementes, in Richtung des Pfeiles II,

Fig. 3 eine fertige Verankerung mittels eines Befestigungselementes gemäss Fig. 1 und 2,

Fig. 4 ein weiteres erfindungsgemässes Befestigungselement,

Fig. 5 eine weitere Ausführung eines erfindungsgemässen Befestigungselementes, teilweise im Längsschnitt dargestellt.

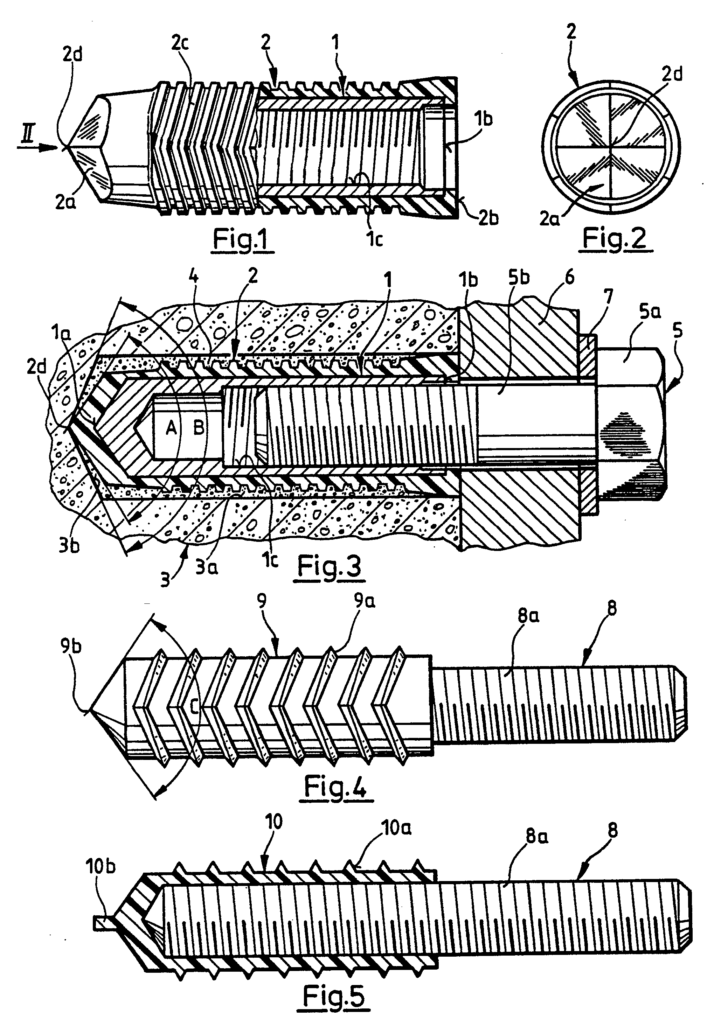

Das aus den Fig. 1 bis 3 ersichtliche Befestigungselement besteht aus einem insgesamt mit 1 bezeichneten, als Gewindehülse ausgebildetem Kernstück und einer dieses umgebenden, insgesamt mit 2 bezeichneten Ummantelung aus einem elektrisch nicht leitenden Kunststoff. Die Gewindehülse 1 weist ein in Setzrichtung vorderes Ende 1a und ein rückwärtiges Ende 1b auf. Vom rückwärtigen Ende 1b her erstreckt sich ein Innengewinde 1c gegen das vordere Ende 1a der Gewindehülse 1. Die Ummantelung 2 weist ebenfalls ein in Setzrichtung vorderes Ende 2a und ein rückwärtiges Ende 2b auf. Die äussere Mantelfläche der Ummantelung 2 ist mit einer pfeilförmigen Profilierung 2c versehen. Das vordere Ende 2a der Ummantelung 2 ist als pyramidenförmige Spitze 2d ausgebildet. In Fig. 3 ist das aus der Gewindehülse 1 und Ummantelung 2 bestehende Befestigungselement in ein Bohrloch 3a eines insgesamt mit 3 bezeichneten Aufnahmematerials eingeführt. In das Bohrloch 3a wurde vor dem Einführen des Befestigungselementes eine aushärtende Masse 4 eingebracht. Die aushärtende Masse 4 dient zur Verankerung des Befestigungselementes im Aufnahmematerial 3. Das Befestigungselement ist so weit in das Aufnahmematerial 3 eingeführt, bis die Spitze 2d am Bohrlochgrund 3b zur Anlage kommt. Der Kegelwinkel A der Spitze 2d der Ummantelung 2 ist kleiner als der Kegelwinkel B des Bohrlochgrundes 3b. Somit kommt das Befestigungselement immer im Zentrum des Bohrloches 3a zur axialen Anlage am Aufnahmematerial 3. Eine Berührung im Umfangsbereich der Ummantelung 2 mit dem Bohrlochgrund 3b ist ausgeschlossen. Somit wird bei einem drehenden Eintreiben des Befestigungselementes eine Zerstörung der Ummantelung 2 verhindert.

Nach dem Aushärten der Masse 4 ist eine insgesamt mit 5 bezeichnete Kopfschraube durch ein zu befestigendes Bauteil 6 hindurch in das Innengewinde 1c der Gewindehülse 1 eingeschraubt. Die Kopfschraube 5 weist einen Sechskantkopf 5a sowie einen teilweise mit Gewinde versehenen Schaft 5b auf. Zwischen dem Kopf 5a der Kopfschraube 5 und dem zu befestigenden Bauteil 6 ist eine Unterlagscheibe 7 angeordnet. Durch Festziehen der Kopfschraube 5 kann das Bauteil 6 gegen das Aufnahmematerial 3 gepresst werden. Die Profilierung 2c der Ummantelung 2 schafft einen Formschluss mit der aushärtenden Masse 4. Im Bohrloch 3a erfolgt in erster Linie eine adhäsive Verbindung der aushärtenden Masse mit dem Aufnahmematerial 3.

Das aus Fig. 4 ersichtliche Befestigungselement besteht aus einem insgesamt mit 8 bezeichneten, mit einem Aussengewinde 8a versehenen Ankerbolzen und einer diesen im vorderen Bereich umgebenden, insgesamt mit 9 bezeichneten Ummantelung. Die Ummantelung 9 weist an ihrem Umfang ebenfalls eine Profilierung 9a auf, die als pfeilförmig angeordnete Rippen ausgebildet ist. Diese Profilierung 9a schafft ebenfalls einen Formschluss mit einer der Verankerung dienenden, aushärtenden Masse. Das in Setzrichtung vordere Ende der Ummantelung 9 ist als kegelförmige Spitze 9b ausgebildet. Der Kegelwinkel C der Spitze 9b ist ebenfalls kleiner als der übliche Kegelwinkel des Bohrlochgrundes im Aufnahmematerial.

Das aus Fig. 5 ersichtliche Befestigungselement besteht aus einem insgesamt mit 8 bezeichneten Ankerbolzen und einer diesen im vorderen Endbereich umgebenden, insgesamt mit 10 bezeichneten Ummantelung aus einem elektrisch nicht leitenden Kunststoff. Die Ummantelung 10 weist an ihrem Umfang eine Profilierung 10a und an ihrem vorderen Ende einen zapfenartigen Fortsatz 10b auf. Der Fortsatz 10b dient beim Einführen des Befestigungselementes in ein Bohrloch als axialer Anschlag. Der Fortsatz 10b kann so dimensioniert werden, dass er bei zu starkem Eintreiben des Befestigungselementes in ein Bohrloch abgetrennt wird, ohne dass dabei die Ummantelung 10 selbst zerstört wird.


## Patentansprüche

1. Mittels aushärtender Massen (4) in einem Bohrloch (3a) in einem Aufnahmematerial (3) verankerbares Befestigungselement, mit einem ein Anschlussgewinde aufweisenden Kernstück (1, 8) aus Metall, das in dem sich in verankertem Zustand im Bohrloch (3a) befindlichen Bereich eine Ummantelung (2, 9, 10) aus einem elektrisch nicht leitenden Kunststoff trägt, **dadurch gekennzeichnet,** dass die Ummantelung (2, 9, 10) im Zentrum ihrer setzrichtungsseitigen Stirnseite einen am Grund des Bohrloches (3a) abstützbaren Anschlag aufweist, der von einem zapfenartigen Fortsatz (10b) oder von der Spitze (2c, 9b) der eine kegelförmige Kontur aufweisenden, setzrichtungsseitigen Stirnseite der Ummantelung (2, 9) gebildet ist.

## Claims

1. A fastening element which can be anchored by means of hardening compositions (4) in a drill-hole (3a) in a receiving material (3), having a core part (1, 8) made of metal which has a connection thread and which bears, in the region present in the drill-hole (3a) in the anchored state, a sheathing (2, 9, 10) made of an electrically non-conductive plastics material, characterised in that the sheathing (2, 9, 10) has, in the centre of its end face on the setting-direction side, a stop which is supportable against the bottom of the drill-hole (3a) and which is formed by a pin-like extension (10b) or by the tip (2c, 9b) of the sheathing (2, 9), on the setting-direction side of the end face which has a conical contour.

## Revendications

1. Elément de fixation pouvant être ancré à l'aide de substances durcissables (4) dans un forage (3a) pratiqué dans un matériau de réception (3), comportant un noyau métallique (1, 8) présentant un filetage de liaison, qui porte dans la région se trouvant, à l'état ancré, dans le forage (3a), une enveloppe (2, 9, 10) en une matière plastique électriquement isolante, caractérisé en ce que l'enveloppe (2, 9, 10) présente au centre de son côté frontal, du côté de la direction de pose, une butée pouvant s'appuyer contre le fond du forage (3a), qui est formée par un prolongement en forme de tenon (10b) ou par la pointe (2c, 9b) du côté frontal de l'enveloppe (2, 9), du côté de la direction de pose, présentant un profil conique.

Fig.1

Fig.2

Fig.3

Fig.4

Fig.5